# EUROPEAN PATENT SPECIFICATION

(11) **EP 1 576 790 B1**
(45) Date of publication and mention of the grant of the patent: **17.04.2013**
(21) Application number: 03781810.1
(22) Date of filing: 06.11.2003
(51) Int. Cl.: H04W 88/08

(54) **DISTRIBUTED WIRELESS NETWORK EMPLOYING UTILITY POLES AND OPTICAL SIGNAL DISTRIBUTION**
VERTEILTES DRAHTLOSES NETZWERK UNTER EINSATZ VON VERSORGUNGSMASTEN UND OPTISCHER SIGNALVERTEILUNG
RESEAU SANS FIL REPARTI UTILISANT DES POTEAUX DES SERVICES PUBLIQUES ET LA TRANSMISSION OPTIQUE DES SIGNAUX

(30) Priority: 05.12.2002 US 313927
(43) Date of publication of application: 21.09.2005
(73) Proprietor: Nextg Networks, PA 15317 (US)
(72) Inventor: CUTRER, David, Fremont, CA 94555 (US); MANI, Sanjay, Palo Alto, CA 94306 (US)
(74) Representative: McGowan, Cathrine
(86) International application number: PCT/US2003/035497
(87) International publication number: WO 2004/054276

(56) References cited:
- EP-A1- 1 089 579
- EP-A2- 0 476 569
- EP-A2- 1 227 605
- WO-A1-98/16054
- US-A- 5 067 173
- US-A- 5 424 864
- US-A- 5 648 961
- US-A- 5 650 679
- US-A1- 2002 103 012
- US-A1- 2004 005 897
- US-A1- 2004 017 785
- US-A1- 2004 023 692
- US-A1- 2004 037 566
- US-A1- 2004 039 565

## Description

### BACKGROUND OF THE INVENTION

### Field of the Invention:

This invention relates generally to optical and wireless networks, and more particularly to physical equipment design for embedding in streetlamps, utility poles, and other urban poles.

### Description of the Related Art:

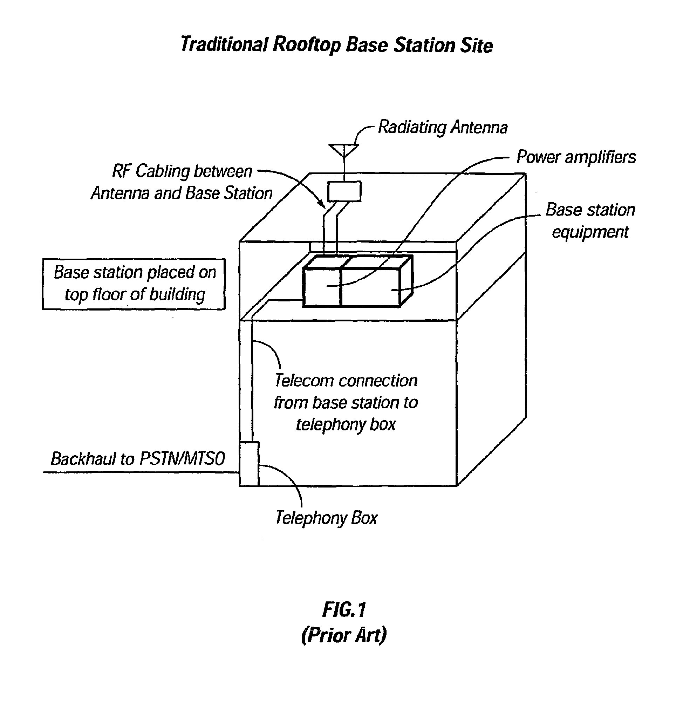

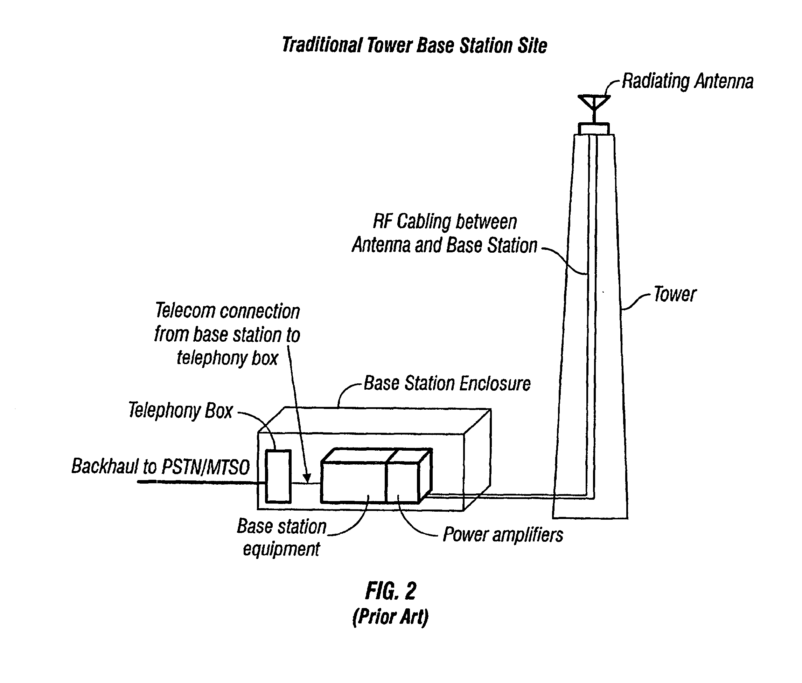

Cellular networks are currently deployed by co-locating antennas and base stations at sites that are either bought or leased and can support such installations. Typical sites include rooftops (Figure 1) and towers (Figure 2). In Figure 1, an antenna is placed on a rooftop, and the base station equipment placed on the top floor of the building. In Figure 2, the base station is placed in a protective enclosure, a high tower is installed, and then the antenna is placed at the top of the tower. In both implementations, the downlink RF signal is emitted by a power amplifier. Such amplifiers are large, heavy, and require a large amount of electrical power. Part of their large size is due to large heat dissipation requirements. The traffic from this base station would then be backhauled to the switching network via several T-1 data links. Unfortunately, the base station equipment can be heavy, large, and have extensive power and environmental requirements, which make it difficult to site. Furthermore, the network is difficult to maintain because complex pieces of equipment are distributed throughout the network. In addition, the traffic from each base station must be individually backhauled back to the switching network.

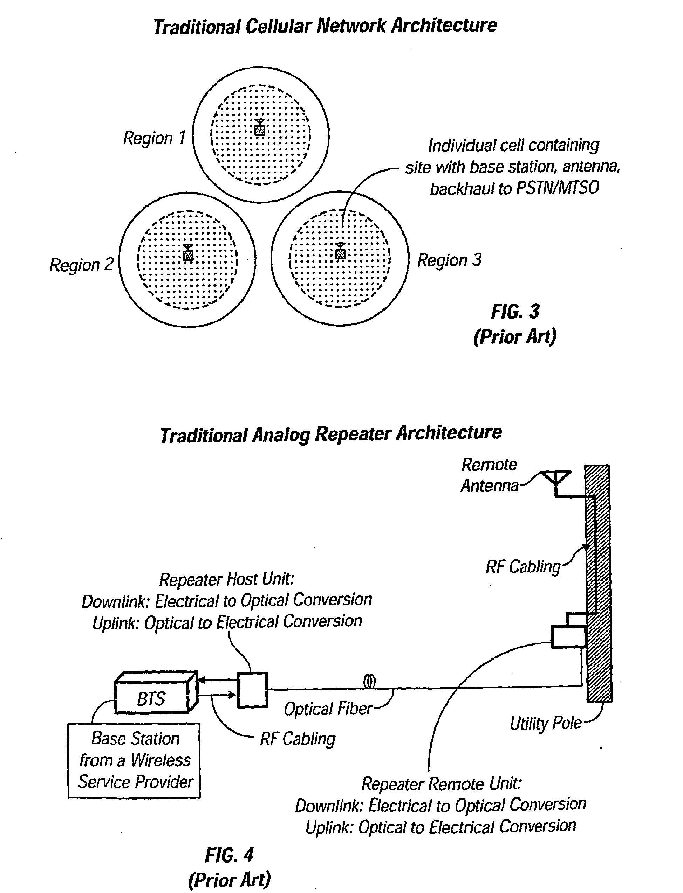

Rooftop and tower sites are not easily acquired, because of the extensive zoning and real estate requirements for placing BTS equipment and an antenna at a given location. Figure 3 depicts a typical network coverage deployment architecture. Due to the specificity of the cellular network layout, the antenna sites must be placed in a very specific location, often a city block, making the site placement problem even more difficult. Without this specificity, a cellular network cannot effectively cover a geographic region. As network traffic continues to grow, density of cell sites needs to increase, which creates a need for more sites at specific locations. These new locations must not only provide desired coverage, but not interfere with the existing sites. New sites are increasingly difficult to find, acquire zoning permits for, and lease.

An alternate deployment architecture is occasionally used for difficult to cover areas, such as buildings or narrow canyons. This architecture is illustrated in Figure 4. A proprietary point-to-point repeater link is used in which the near end is connected to the base station and the far end is connected to the antennas. In Figure 4, the link is an optical fiber link, which carries uplink and downlink signals from one or a series of antennas to a base station over optical fiber. The uplink and downlink signals can be placed on 2 fibers, or can be placed on different wavelengths on the same fiber. Typical wavelengths employed for this type of equipment are 1550nm and 1310nm. The repeater approach allows for the base station equipment to be remotely located from the antenna placement. This makes antenna placement in difficult areas, like canyons or buildings, easier, because the remote repeater units are much smaller and more rugged than standard BTS equipment. In Figure 4, the antenna has been placed on a utility pole at some distance from the BTS equipment. The point-to-point links can take several formats, in Figure 4, an analog optical repeater is employed over a fiber link to connect a base station to a remote antenna.

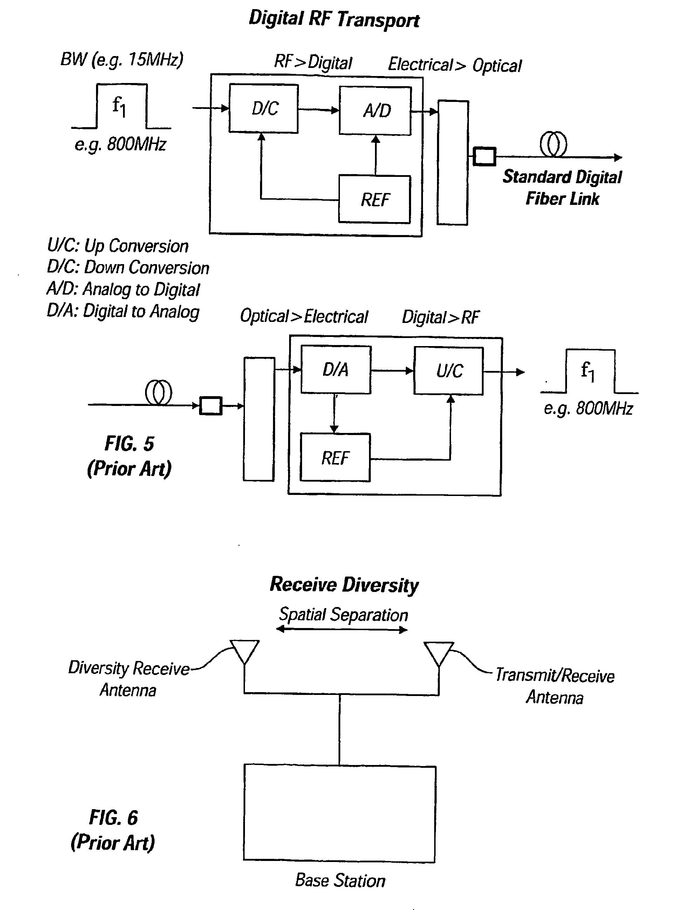

Technologies exist that provide a single link for a radio signal to be transmitted in an analog fashion over some distance. The signal can be downconverted to an IF or sent at RF. Analog links can be over several media, including single mode fiber, multi-mode fiber, coaxial cable, etc. Several inventions have been proposed in this domain, over fiber, they employ pairs of optical transmitters/receivers to send uplink and downlink signals over a fiber length. The two ends are connected to the antenna and the base station. Another solution to providing a point-to-point repeater from a cellular antenna to a base station is to digitize the analog signal, transmit it digitally over an optical link, and then convert it back to an analog signal. Such a system is illustrated in Figure 5. An analog RF signal is downcoverted to baseband, sampled, and then the digital signal is converted to an optical signal and transmitted over an optical link. At the far end, the digital signal is converted back into an analog signal, upconverted to the RF band, and transmitted. Although only one direction is illustrated, clearly a duplex link can be created.

Schemes for digitizing the bandwidth of a cellular signal using down conversion to baseband followed by an A/D converter and a parallel-to-serial converter exist. This converts an analog signal to a raw digital bit stream. The reverse conversion, serial to parallel converter, followed by a D/A converter and then up conversion, allows for conversion of this raw digital bit stream back to an analog signal. Digital transmission requires down conversion, unlike analog transmission which may occur at RF. It also, however, greatly mitigates reduction in signal dynamic range from the link properties, since as long as sufficient signal-to-noise ratio is maintained and enough sampling bits are used, the signal dynamic range is not significantly affected.

Raleigh fade, caused by multi-path interference, is a common problem in cellular systems. It is typically addressed by employing 2 or more receive antennas, placed at a spacing of at least the operating wavelength, as illustrated in Figure 6. This is known as receive diversity. It is very unlikely that the same multi-path interference would occur at 2 separate spatial antenna locations simultaneously, so this type of fading is effectively combated by receive diversity.

US 5,424,864 describes a microcellular mobile radio communication system having a central base station and a plurality of radio base stations interconnected by a shared optical fiber transmission line. In the central and radio base stations, electrical radio signals are frequency-converted to frequencies assigned to the radio base stations and then converted into optical signals. In the central base station, the optical signals are combined for transmission through the optical fiber transmission line to the radio base stations. Alternatively, the frequency-converted electrical radio signals may first be combined and then converted into an optical signal for transmission. In the radio base stations, the electrical radio signals are converted to optical signals, which are combined and transmitted through the transmission line to the central radio station. In each radio base station, the frequency of the radio signal extracted from the received combined signal is frequency-converted to a frequency to be transmitted from its antenna, with the other signals filtered out. The central base station demodulates the received combined signal from the radio base stations into signals for the exchange office. The radio signals in different frequency bands assigned to each radio base station can simultaneously be transmitted through the shared optical fiber transmission lines between the radio and central base stations.

EP 1,089,579 describes a road vehicle communication system including frequency converters and a multiplexer/demultiplexer which can deal with up-going and down-going radio signals in a duplex way. Each local base station covering a particular service area needs only a minimum number of antennas without regard to the number of information services available with the system. Even when the number of information services to be handled by the system increases or decreases, the frequency converters and multiplexer/demultiplexer ensure the provision of multimedia and other information services without any system modification and thereby enhance the general-purpose applicability of the system. Each mobile station needs only a single antenna because of the shared radio frequency band and multiplexing and demultiplexing operations. A central base station confines service-by-service frequencies in a single frequency band, so that the individual local base station can be scaled down.

WO 98/16054 describes a cellular system including wide band digital signal processing at a central office that is connected to one or more cellular sites by optical fiber cables. Data signals are exchanged between the cell sites and the central office using intensity modulated optical data signals. Control of call supervision and handling is consolidated in the central office to enable dynamic variation of wireless service reception and transmission capabilities at a cell site in response to changing demands for wireless service. Each antenna at a cell site may receive and transmit an assigned RF bandwidth using any frequency within that band. The central office processes the entire received spectrum for controlling detection and transmitting range, RF carrier frequency and transmit power level for an active channel link established between a cellular station and the system in a cell site.

US 5,648,961 describes a radio telephone system and an antenna device and a base station for the same which permit the expansion of a radio communication range and also further extension of the distance between the base station and an antenna. A single base station accommodates a plurality of antenna devices and the base station and the antenna devices are connected by optical fiber cables. Each of the antenna devices is equipped primarily with an optical-to-electrical converter, an electrical-to-optical converter, a distributor, frequency converters/amplifiers, local frequency oscillators, a control channel signal detector, a transmit/receive switcher, a controller, and antenna. The transmit/receive switching control is synchronized with the transmitting and receiving timings for send and receive signals transferred to and from the base station by using a slot number transmitted through a transmission control channel. The plurality of antenna devices connected to the single base station make it possible to expand the radio communication range to an arbitrary range in practical use; they also permit free selection of an area of radio communication range by connecting the base station with the antenna devices by optical fiber cables. In addition, the transmit/receive switching control of the antenna devices is carried out in accordance with the receiving timing of a slot number of a transmission control channel from the base station. This ensures accurate transmit/receive switching control.

US 5,067,173 describes a microcellular station which is a transceiving unit covering a relatively small geographic area and adapted to establish bidirectional links between mobile telephone subscriber stations and a main base station. Each such microcellular station includes a transmitter for generating outgoing signals directed to the main base station over an optical fiber link. Radio signals received from a mobile station at a separate diversity antenna of the microcellular station are frequency shifted and combined with other signals received from the mobile station. The transmitter at the microcellular station generates an optical carrier signal which is modulated by the resulting combined signals. A frequency converter, located at the main base station, restores the frequency band of signals received from the microcellular station to its original frequency. Frequency shifting and conversion are implemented at the microcellular station and at the main base station by frequency mixing steps performed by oscillators at both locations, which oscillators use the same reference frequency thereby achieving channel coherency.

### SUMMARY OF THE INVENTION

Aspects and embodiments of the invention are defined in the appended claims.

### DESCRIPTION OF THE DRAWINGS

Figure 1 - Typical rooftop cellular site. In this site, an antenna is placed on the rooftop, connected with coaxial RF cable to a base station radio/transceiver (BTS) unit. The BTS equipment includes large downlink power amplifiers. This unit is then backhauled to the cellular network.
Figure 2 - Typical tower cellular site. In this site, an antenna is placed on the top of a tower, connected with coaxial RF cable to a base station radio/transceiver (BTS) unit, which is placed in a protective enclosure. This radio/transceiver is then backhauled to the cellular network. The BTS equipment includes large downlink power amplifiers.
Figure 3-Typical deployment of cellular network. Base station/antenna sites are located at specific points across a geographic area chosen to provide coverage. Each site is backhauled to the cellular network via 1 or more T-1 digital links.
Figure 4 -Analog repeater connecting a remote antenna to a base station over an optical fiber link. The base station equipment along with the optical repeater host equipment is placed in one location, and then connected over fiber to a remote location, such as a utility pole in a canyon. The remote repeater equipment is placed at the utility pole, along with the remote antenna for transmission and reception. Both uplink and downlink signals can be carried on a single optical fiber, using standard WDM multiplexing at 1310 nm and 1550 nm.
Figure 5 - Transmitter and receiver chain for transmission of antenna signal over a digital link. The signal is down converted, sampled, digitized, and then transmitted in digital format. This signal is then converted back into an analog signal through the reverse process. Such a link is implemented both for uplink and downlink signals.
Figure 6 - Diversity receive. Two receive antennas are employed to combat Raleigh fading.

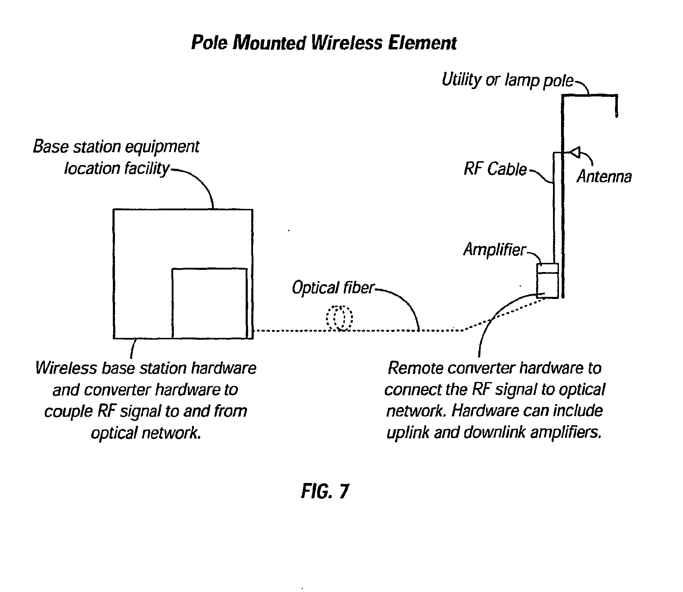

Figure 7 - A single pole-mounted antenna employing an optical network to remotely distribute the BTS signal. BTS equipment is located at a co-location facility, and a converter box is employed to convert RF signals to optical signals for downlink, and optical signals to RF signals for uplink. The BTS signal is the distributed optically to pole location. At the pole location, a remote converter/amplifier unit is employed to convert the optical signals to RF signals for downlink, and RF signals to optical signals for uplink. At the remote pole, an amplifier can also be placed in the downlink path to amplify the radiated signal, and in the uplink path to amplify the receive signal. A single pole element is illustrated.

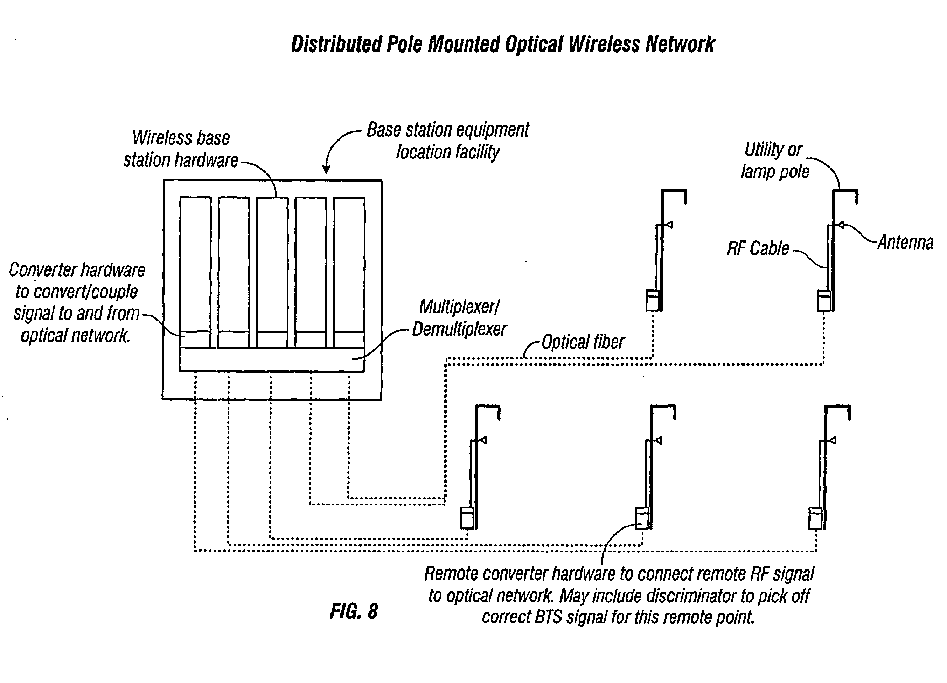

Figure 8 - Distributed fiber fed pole-mounted antenna architecture. Several remote antennas are fed over an optical network from a single co-location facility holding BTS equipment for multiple remote sites, along with optical/RF converter equipment. Each remote site consists of a remote converter/amplifier unit, and potentially a network discriminator element to pick off the correct signal for the remote location.

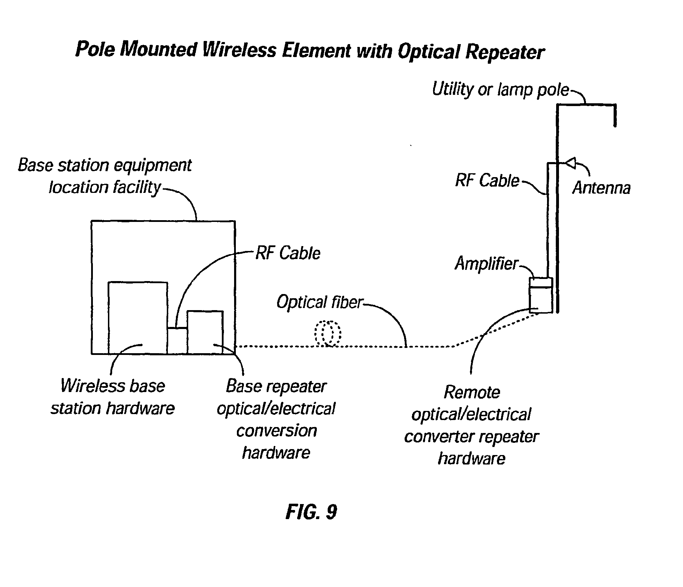

Figure 9 - A single pole-mounted antenna employing an optical repeater system to remotely distribute the BTS signal. BTS equipment is located at a co-location facility, and a base repeater optical/electrical converter (O/E) box is employed to convert RF signals to optical signals for downlink, and optical signals to RF signals for uplink. The BTS signal is the distributed over optical fiber to pole location. At the pole location, a remote repeater O/E converter/amplifier unit is employed to convert the optical signals to RF signals for downlink, and RF signals to optical signals for uplink.

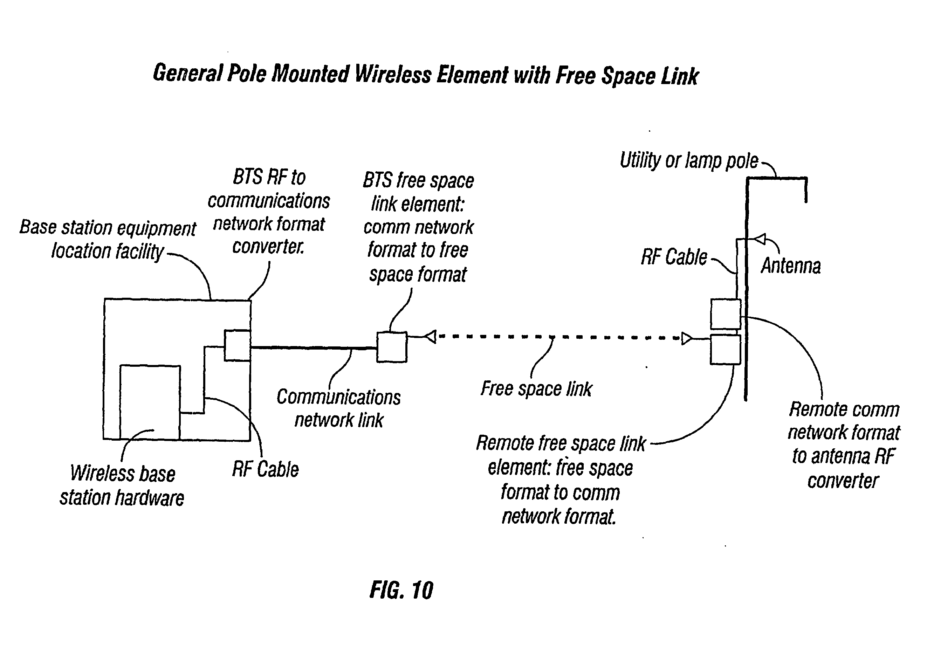

Figure 10 - Free space link fed pole-mounted antenna architecture. Remote equipment mounted on pole is connected to communications network over free space link. Link can be optical or RF. Remote equipment couples RF on antenna side to RF/communications format converter, which is in turn connected to a free space link transport medium. On network side is a symmetric free space link unit. The BTS equipment is connected to an RF/communications network format converter, which is connected over a communications network to the near end of the free space link unit. In a simple case, the communications network could be a simple cable, and the free space unit could be connected directly to the converter unit.

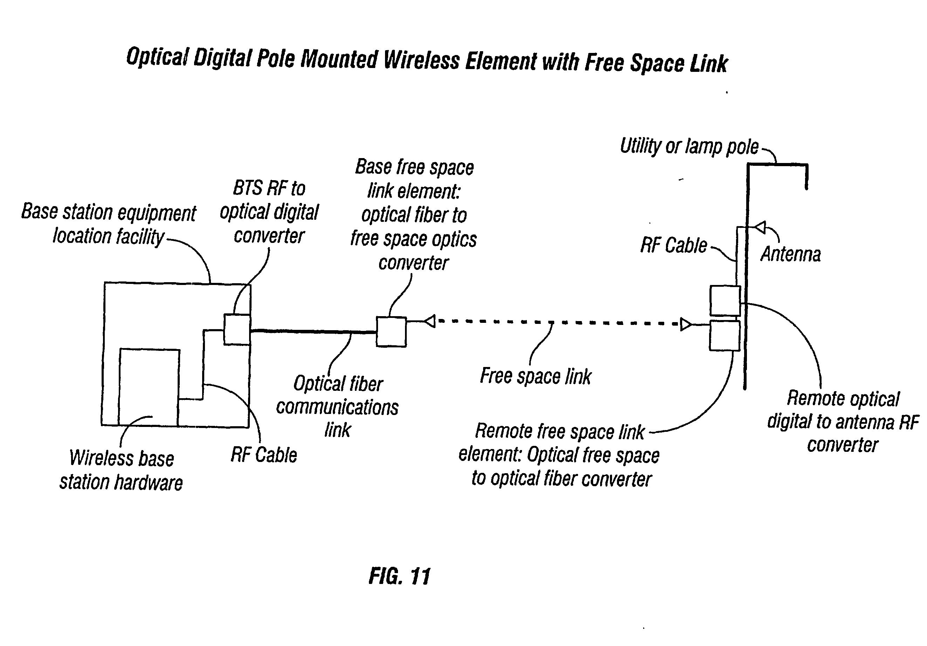

Figure 11- Optical digital free space link fed pole-mounted antenna architecture. Remote equipment mounted on pole is connected to communications network over free space optics (FSO) link. Remote equipment converts RF on antenna side to an optical digital fiber signal, which is in turn converted to an FSO signal. On the network side, the free space optical link converts between FSO signals and optical signals. This FSO link is connected to a digital optical communications link, which is in tern connected to a device which converts between digital optical signals and analog RF signals. This final converter is connected to the BTS equipment, to an optical signal. The optical signal is a digital signal, which is converted into an analog RF signal. In a simple case, the communications network could be an optical cable, and the free space unit could be connected directly to the converter unit.

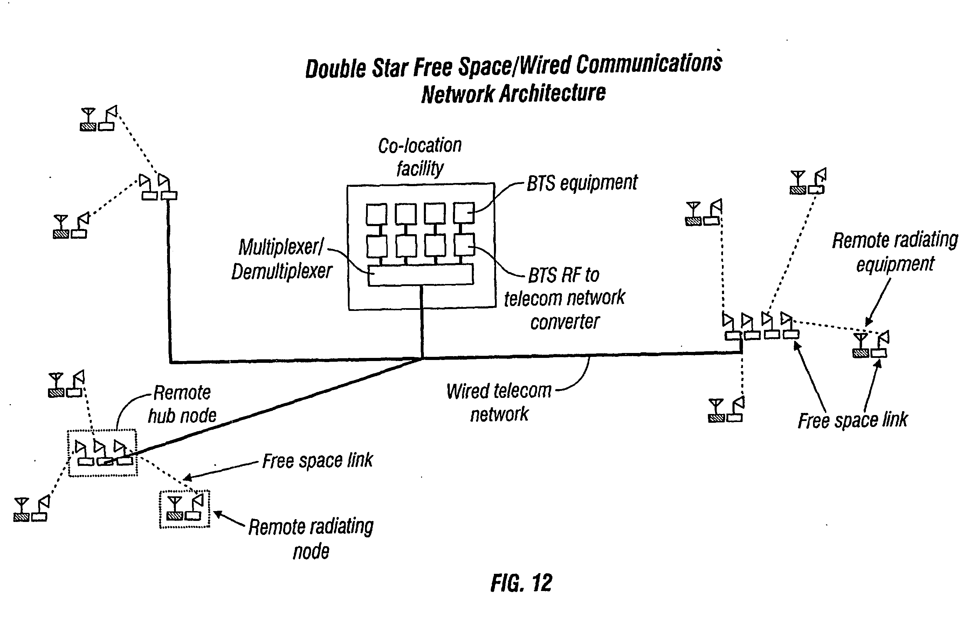

Figure 12 - Double star free space/wired communications network infrastructure. A wired infrastructure such as optical fiber is links the base station co-location facility to remote hub nodes. The hub nodes are linked to remote radiating nodes through a free space link, such as an optical free space link. Remote hub equipment converts the signals between the first wired infrastructure and free space signals. Remote equipment mounted on or near the pole converts signals between free space signals and RF signals.

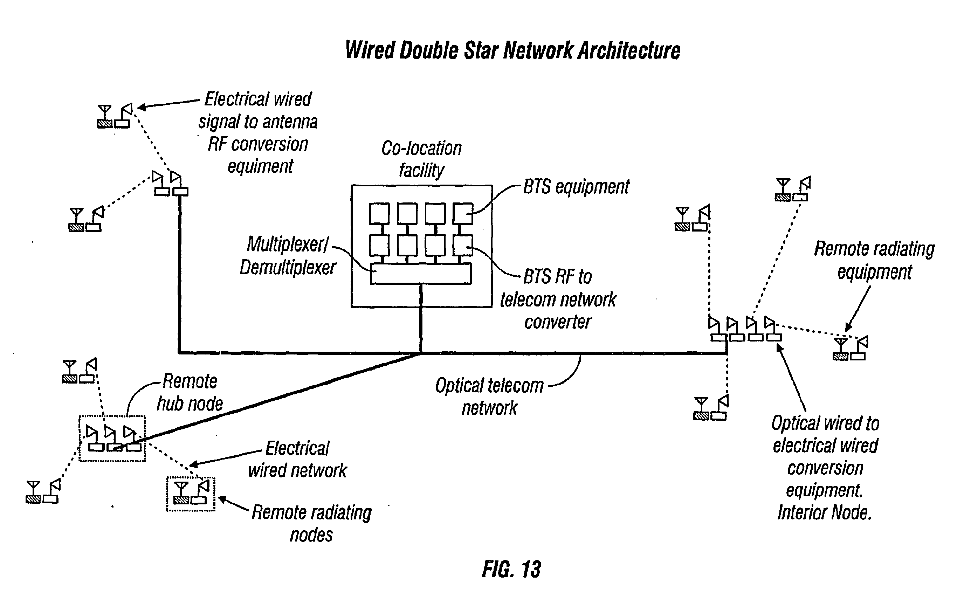

Figure 13 - Double star wired poles communications network infrastructure. A first optical wired infrastructure such as single mode optical fiber is links the base station co-location facility to remote hub nodes. The hub nodes are linked to remote radiating nodes through a second type of electrical wired infrastructure, such as coaxial cable or CAT V cable. Remote hub equipment converts the signals between the optical and electrical wired infrastructures. Remote equipment mounted on or near the pole converts signals between the electrical wired infrastructure and RF signals.

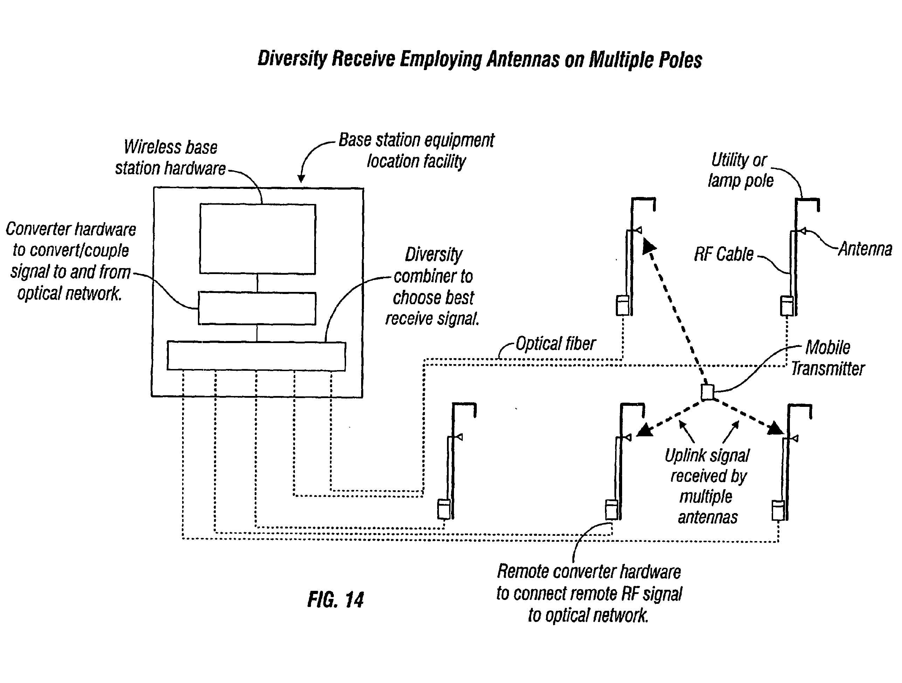

Figure 14 - Employ multiple antennas placed on different poles to create diversity receive. A receive signal in from a mobile unit can be received by remote units attached to antennas on different poles. The multiple signals are carried back to the base station location, and the highest signal is chosen or multiple signals are combined to create a receive signal with higher immunity to uplink fades from spatial receive diversity.

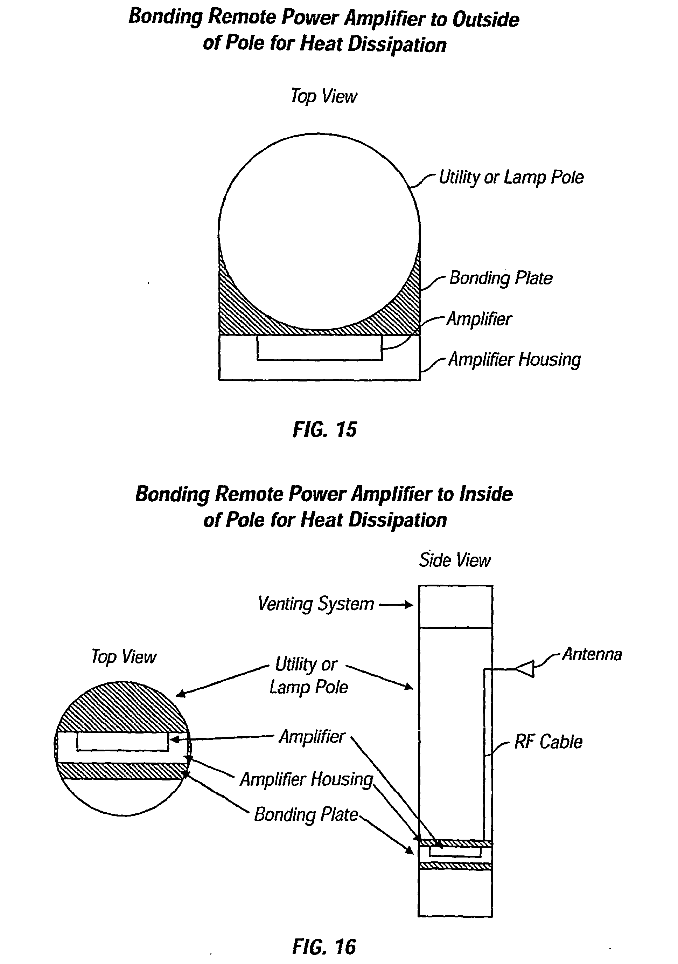

Figure 15 - Bonding power amplifier to metal pole via heat conductive media in order to assist heat dissipation. The amplifier is mounted outside the pole, and then connected to the pole via a heat conductive plate that is formed to bond effectively to both the power amplifier and the pole.
Figure 16 - Bonding power amplifier to metal pole via heat conductive media in order to assist heat dissipation. The amplifier is mounted inside the pole, and then connected to the pole via a heat conductive plate that is formed to bond effectively to both the power amplifier and the pole. A weatherproofed venting system is placed at the top of the pole to assist heat dissipation.

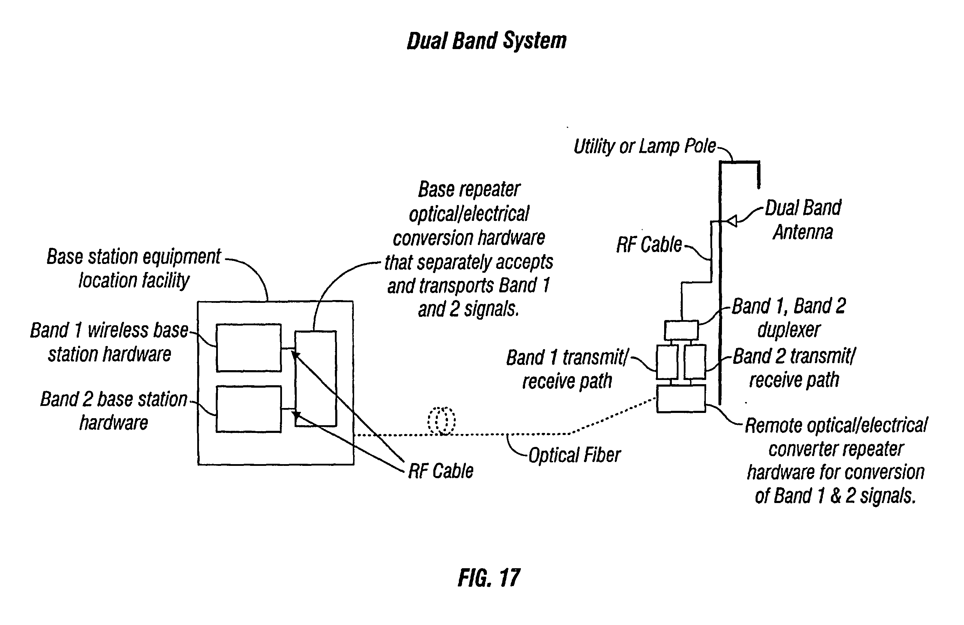

Figure 17 - Dual band system. This system transports 2 signals from 2 different frequency bands. Two base stations are connected to the electrical-optical hub conversion system co-located with the base stations. This hub then transports the signals optically to the remote location, the 2 signals can be multiplexed in various ways on over the link, including different optical wavelengths, different RF frequencies on the same wavelength, or different optical fibers. At the remote end, the electrical-optical conversion unit is in turn connected to 2 transmit/receive units for each frequency band, which are connected to a frequency duplexer and then to a dual band transmit/receive antenna.

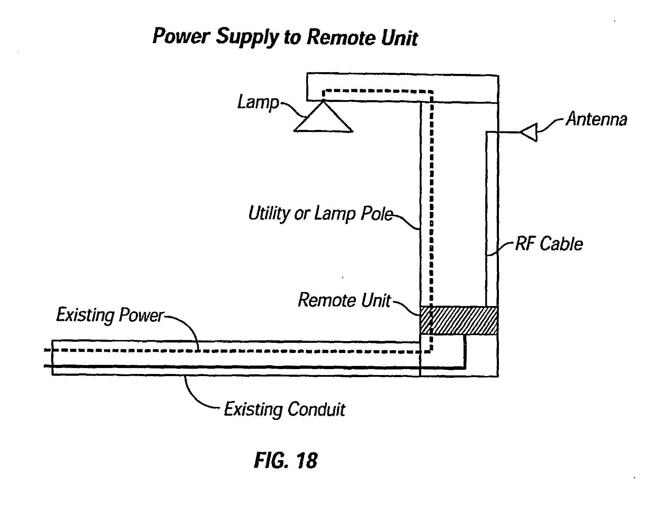

Figure 18 - Power for the remote unit placed at the utility or lamp pole location is fed through the same conduit system that feeds power to the pole, with an independent line.

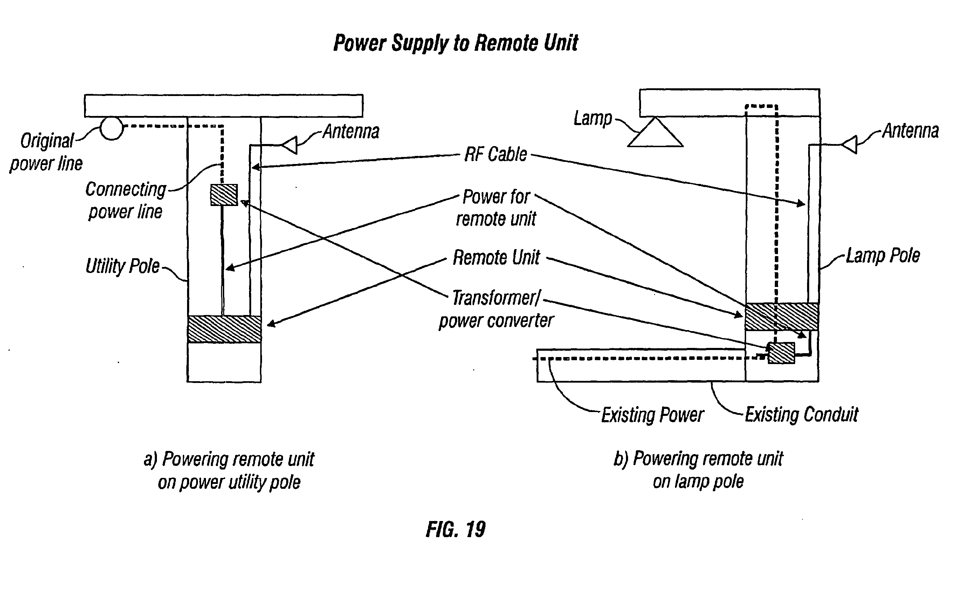

Figure 19 - Power for the remote unit placed at the utility or lamp pole location is pulled off of either the power line, for a power pole, or the power supply line for a lamp pole. A transformer/power converter is employed to convert existing power into the power required by the remote unit.

### DETAILED DESCRIPTION OF THE PREFERRED EMBODIMENTS

One exemplary embodiment provides methods and apparatus that are directed to providing wireless coverage in a region by employing existing poles (utility, streetlamp, telephone, etc.) as part of a distribution network. Base station equipment is placed in a co-location facility, and then the BTS signals are distributed over a communication network to remote pole locations, where the signal is radiated from antennas mounted on the poles. This coverage can be for wireless data or voice, and can employ various current and future standards, including cellular standards such as GSM, CDMA, and UMTS, and IP data standards such as 802.11a and 802.11b.

In one exemplary embodiment, the network is an optical network. The antennas that radiate RF are placed on poles, and associated converter hardware is located at the pole location to amplify wireless cellular signals and connect them to an optical network by optical/RF conversion. This is illustrated in Figure 7 for single remote element. The base station equipment is placed in a co-location facility and connected to a converter that couples the BTS equipment to an optical network. The optical network transports an optical representation of the wireless cellular signals. Therefore, the base station equipment and the remote antennas are connected with converter units and an optical communication network.

In this exemplary embodiment, many remote elements can be connected to a facility that holds the equipment for all these remote elements, illustrated in Figure 8. The optical network can employ various forms of multiplexing to carry multiple signals. In a preferred exemplary embodiment of the invention, optical wavelength multiplexing can be employed. Other forms of multiplexing including multiple optical fibers, time division multiplexing, and RF frequency division multiplexing can also be employed. The remote elements can contain discriminators to select the proper signal. These discriminators can be optical, such as a Optical Add/Drop Module (OADM) to drop a given optical wavelength, or electrical, such as time-division demultiplexer. At the co-location facility, multiple downlink signals are multiplexed onto the network and uplink signals are de-multiplexed into the correct BTS radio receivers.

In an exemplary embodiment,the BTS equipment is connected to the optical network by a host repeater unit, and the remote system on the pole is a remote repeater unit. This is illustrated in Figure 9. As in Figure 8, this equipment can then be connected to network multiplexing equipment, such as optical multiplexing equipment, to put multiple RF signals on the same optical network.

In a preferred exemplary embodiment, small low power remote downlink amplifier units can be placed at pole locations alongside antennas, while the BTS equipment is placed in co-location facilities. In a preferred exemplary embodiment of the current invention, the co-located BTS equipment need not employ large downlink power amplifiers.

In one exemplary embodiment , conduits that feed electrical power to the distribution poles are employed to distribute optical fiber to the distribution poles.

In another exemplary embodiment, a free space system is employed to form a duplex link to the remote equipment on the utility pole and transmit/receive the BTS signal across it. The general case is illustrated in Figure 10. The free space link can form the last link in a communications network to the remote pole, or the BTS equipment can be co-located with the near side free space equipment. On the downlink path, a converter links the BTS RF signal to a communications network, and then at the end of the communications network, a free space unit to takes the communications network signal and converts it into a free space signal, to reach the remote pole location.

On the remote pole, a device converts the free space signal back to the communications link format, and then another device converts the communications signal back into an RF signal to feed to the antenna. Format conversion from wired communications network to free space can take may forms, depending on the nature of the free space link.

As an illustration, but not by way of limiting the potential forms, free space links include conversion of an optical wired signal to an optical free space signal without electrical conversion, optical-electrical-optical conversion, RF free space links that accept an optical or electrical input bit stream or analog waveform of a completely different format, and optical wireless links that take various electrical inputs. The whole link functions in the reverse direction on the uplink. In a preferred embodiment, the free space link is free space optics. In a preferred embodiment, the communications link format is a digital optical signal. In another embodiment, the link can involve conversion of the analog RF signal into an analog optical signal.

Figure 11 illustrates a link in which the RF signal is converted to a digital optical signal, and then this digital optical signal is converted to a free space optics signal. In another embodiment, the free space link is RF. The link can involve conversion of the analog RF signal into a digital or analog RF signal.

A potential implementation of the architecture with free space links is a double star architecture, in which wired communications network distributes the signals to point locations, which then launch the signals to the remote poles over free space links. This is illustrated in Figure 12.

Another set of exemplary embodiments employs links other than optical fiber or free space links to connect antennas placed on poles with base stations. The other transport mediums can be RF wired links, such as CAT V or co-axial cable. They can be employed in a double star architecture, as illustrated in Figure 13, or they can form the entire communication network. Repeater hardware is employed to convert the wireless RF signal into the signal for the transport medium, and back again. Over the transport network, native optical and electrical drivers and routing equipment is used.

One exemplary embodiment takes advantage of a dense spacing of antennas to provide diversity reception to combat multipath fading, by selectively combining signals from antennas placed on different poles. This selective combination can employ existing multiple receive diversity ports on the BTS equipment, or a dedicated diversity receive system. A dedicated device can be employed which determines the receive signal level from several antennas for a given transmission, and employs the highest level.

This is illustrated in Figure 14. CDMA, a widely used cellular standard, already employs a similar mechanism in soft handoff, in which the optimal receive signal is chosen from multiple base stations by the MSC (Mobile Switching Center). This technique would be extremely effective in the pole receive network, and would mitigate the need for multiple receive antennas on each pole.

Employing streetlamps and similar poles radiating points for wireless system requires employing small devices that fit on or in the pole. In the current invention, a crucial size driver is the need to dissipate power from the RF amplifiers needed to transmit the downlink signal. One solution is to bond the amplifier to a metal light or utility pole, and use that metal as the heat dissipater. The amplifier would be bonded to its housing through a heat conductive bond, and then the housing bonded to the metal pole through an intermediary head conductive plate which is fitted on one side to bolt to the pole and flat on the other side to bond amplifier housing. This is illustrated in Figure 15 for an amplifier mounted on the outside of a pole. The plate could be bonded to each side with a heat conductive adhesive to increase heat conductivity. In Figure 16, the amplifier is placed on the inside of the pole, and then bonded to the pole through a properly formed heat conductive plate. To assist in heat dissipation when the amplifier is on the inside of the pole, a weatherproofed venting system is placed at the top of the pole.

An additional exemplary embodiment is to share it between multiple wireless operators, both voice and data, and for it to be operated and implemented by a neutral host provider. This allows the costs of infrastructure to be shared across multiple operators. Since there are many methods of multiplexing multiple cellular signals over such wired and free space communications networks, these multiplexed methods can be employed to service multiple operators. In one embodiment, multiple optical wavelengths can be employed for multiple operators. In another embodiment, multiple time slots can be employed for multiple operators. In a preferred embodiment, two different RF frequencies can be used to transport the two signals over the optical link.

In a preferred exemplary embodiment, two different frequency bands (such as PCS and Cellular) can be served by a combined system that employs a single dual band system that uses different transport and radiating equipment for the two bands. The dual band remote box is used that contains two downlink power amplifier systems that feed a single dual band antenna through a frequency duplexer, and two distinct receive chains for each band again fed by the duplexer in the uplink direction. This system is illustrated in Figure 17. Two different operators or a single operator employing two different frequency bands can occupy the two bands. In other embodiments, the optical link could be an RF link or electrical link to transport the two RF bands.

In another exemplary embodiment, the equipment located at the remote pole locations for radiating signals is powered by power run to these devices through the conduit system that currently supports power and communications requirements for the light and utility poles. In another embodiment, the remote equipment is powered directly off of the lamp or utility pole power, employing a transformer/power converter for required voltage, current, and AC/DC conversions. Figure 18, pulling another cable for dedicated power through existing conduit is illustrated, while in Figure 19, power supply from existing utility or lamp power is illustrated.

## Claims

1. A cellular network, comprising:
a plurality of antennas, each antenna is mounted to a corresponding one of a plurality of existing poles or posts in a region to provide wireless coverage in the region;
a first set of converters, each converter in the first set of converters is positioned at a corresponding one of the existing poles or posts, is coupled to the antenna mounted thereat, and is configured to convert between distribution network signals and cellular signals;
a distribution network configured to couple the first set of converters to a hub site: and
base station capacity equipment at the hub site coupled to the first set of converters via the distribution network; wherein:
the first set of converters are coupled to the distribution network; and **characterised in that**
equipment located at each of the plurality of existing poles or posts is adapted to deliver electrical power to the corresponding converter via a same power distribution system adapted to provide electrical power to the existing poles or posts.

2. The cellular network of claim 1 wherein:
the same power distribution system is adapted to provide electrical power to the existing poles or posts via a plurality of existing conduits: and
the distribution network comprises a plurality of optical fiber links which are distributed to each of the plurality of existing poles or posts via the plurality of existing conduits.

3. The cellular network of claim 1 wherein the distribution network comprises a free space optical link.

4. The cellular network of claim 1 wherein the distribution network comprises RF cabling.

5. The cellular network of claim 1 wherein the distribution network comprises a free space microwave link.

6. The cellular network of claim 1 wherein the plurality of existing poles or posts comprise at least one of utility and street lamp poles; and
the corresponding converter at each of the plurality of existing poles or posts is powered directly off of the lamp or utility pole power, employing a transformer/power converter for required voltage, current, and AC/DC conversions.

7. The cellular network of claim further comprising:
a neutral network host provider for implementing sharing of the cellular network among multiple cellular operators.

8. The cellular network of claim 1, further comprising:
a second set of converters adapted to couple the distribution network to the base station capacity equipment.

9. The cellular network of claim 8, wherein the first and second set of converters have different RF characteristics, including at least one of output power and RF frequency.

10. The cellular network of claim 8 wherein:
each converter in the first set of converters is adapted: (a) to convert downlink distribution network signals to downlink cellular signals, (b) to amplify the downlink cellular signals and (c) to convert uplink cellular signals into distribution network signals, and
each converter in the second set of converters is adapted: (a) to convert downlink cellular signals into distribution network signals and (b) to convert uplink distribution network signals into cellular signals.

11. The cellular network of claim 1, wherein multiple cellular signals are multiplexed on the distribution network by placing them at different RF frequencies.

12. The cellular network of claim 2, wherein multiple optical wavelength multiplexing is used to multiple multiple cellular signals on the distribution network.

13. The cellular network of claim 12, wherein:
multiple wavelengths are distributed via the distribution network and received at the plurality of existing poles or posts;
the cellular distribution network further comprising a discriminator at each of the plurality of existing poles or posts for selecting a sub-set of the multiple wavelengths.

14. The cellular network of claim 12, wherein different cellular operators use different optical wavelengths of the multiple wavelengths to implement sharing of the cellular distribution network among multiple cellular operators.

15. The cellular network of claim 1, in which the first set of converters that are coupled to the antennas are built with lower power downlink RF amplifiers which use less than 40 watts, in order to reduce the size of the remote unit.

16. The cellular network of claim 1, wherein the distribution network is provided using a double star architecture with a primary star network adapted to distribute signals from a primary hub site to secondary hub sites, and a set of secondary star networks adapted to distribute the signals from the secondary hub sites to the plurality of existing poles or posts

17. The cellular network of claim 16, wherein the primary and secondary networks are adapted to use at least one of different media and different transport protocols to distribute the signals.

18. The cellular network of claim 17, wherein the first star network comprises optical fiber links and the second star network comprises free space links.

19. The cellular network of claim 18, wherein the free space links comprise microwave links.

20. The cellular network of claim 18, wherein the free space links comprise optical links

21. The cellular network of claim 1, wherein uplink reception from the antennas is combined at the base station capacity equipment to provide receive diversity.

22. The cellular network of claim 21, further comprising:
a dedicated switch device at the base station capacity equipment configured to select the best uplink receive signal.

23. The cellular network of claim 21, further comprising:
a dedicated receive combination device at the base station capacity equipment configured to combined multiple uplink signals to form an optimal uplink receive signal.

24. The cellular network of claim 21, wherein different uplink antenna signals from different ones of the plurality of existing poles or posts are placed at different uplink receive and receive diversity ports on existing base stations at the base station capacity equipment.

25. The cellular network of claim 1, wherein a downlink signal from the base station capacity equipment is transmitted from multiple ones of the antennas on multiple ones of the plurality of existing poles or posts to provide transmit diversity.

26. The cellular network of claim 15, further comprising:
a plurality of heat conductive plates, each heat conductive plate comprises a heat conductive media selected to provide a heating dissipation capability, and is formed to bond a corresponding one of the low power downlink RF amplifiers to a corresponding one of the plurality of existing poles or posts and to use metal of the plurality of existing poles or posts as a heat dissipater.

27. The cellular network of claim 1, wherein:
the first set of converters contains two sets of equipment to convert two different RF bands between optical and RF signals;
the optical distribution network is adapted to transport two sets of optical signals representing RF signals from the two different RF bands; and
the converter at the base station site contains two sets of equipment to convert two different RF bands between optical and RF signals.

28. The cellular network of claim 26 wherein:
each of the low power downlink RF amplifiers is bonded to a housing through a heat conductive bond, and the housing bonded to the existing pole or post through an intermediary heat conductive plate which is fitted on one side to bolt to the existing pole or post and flat on the other side to bond to the housing

29. The cellular network of claim 28, wherein:
at least one of the plurality of heat conductive plates and a corresponding one of the low power downlink RF amplifiers are mounted outside a corresponding one of the plurality of existing poles or posts.

30. The cellular network of claim 28, wherein:
at least one of the plurality of heat conductive plates and a corresponding one of the low power downlink RF amplifiers are mounted inside a corresponding one of the plurality of poles or posts.

## Patentansprüche

1. Zellennetz, das Folgendes umfasst:
mehrere Antennen, wobei jede Antenne an einen entsprechenden von mehreren bestehenden Masten oder Pfosten in einem Gebiet montiert ist, um Drahtlosabdeckung in einem Gebiet zur Verfügung zu stellen;
eine erste Gruppe von Umsetzern, wobei jeder Umsetzer in der ersten Gruppe von Umsetzern an einem entsprechenden der bestehenden Masten oder Pfosten positioniert ist, mit der Antenne, die daran montiert ist, gekoppelt ist und konfiguriert ist, zwischen Verteilnetzsignalen und Zellensignalen umzusetzen;
ein Verteilnetz, das konfiguriert ist, die erste Gruppe von Umsetzern mit einem Hub-Standort zu koppeln;
und Basisstationskapazitätseinrichtung an dem Hub-Standort, der über das Verteilnetz mit der ersten Gruppe von Umsetzern gekoppelt ist; wobei:
die erste Gruppe von Umsetzern mit dem Verteilnetz gekoppelt ist; und **dadurch gekennzeichnet, dass**
die Einrichtung, die sich an jedem der mehreren bestehenden Masten oder Pfosten befindet, ausgelegt ist, dem entsprechenden Umsetzer elektrische Leistung über dasselbe Stromverteilungssystem zuzuführen, das ausgelegt ist, elektrische Leistung für die bestehenden Masten oder Pfosten bereitzustellen.

2. Zellennetz nach Anspruch 1, wobei:
dasselbe Stromverteilungssystem ausgelegt ist, elektrische Leistung zu den bestehenden Masten oder Pfosten über mehrere bestehende Leitungen bereitzustellen; und
das Verteilnetz mehrere optische Lichtleitfaserverbindungen umfasst, die zu jedem der mehreren bestehenden Masten oder Pfosten über die mehreren bestehenden Leitungen verteilt sind.

3. Zellennetz nach Anspruch 1, wobei das Verteilnetz eine optische Freiraumverbindung umfasst.

4. Zellennetz nach Anspruch 1, wobei das Verteilnetz HF-Verkabelung umfasst.

5. Zellennetz nach Anspruch 1, wobei das Verteilnetz eine Freiraummikrowellenverbindung umfasst.

6. Zellennetz nach Anspruch 1, wobei die mehreren bestehenden Masten oder Pfosten Stromversorgungs- und/oder Straßenlampenmasten umfassen; und
der entsprechende Umsetzer an jedem der mehreren bestehenden Masten oder Pfosten direkt aus der Lampen- oder Stromversorgungsmastenergie unter Einsatz eines Transformators/Stromrichters für die erforderlichen Spannungs-, Strom- und Analog/Digital-Umsetzungen mit Leistung versorgt wird.

7. Zellennetz nach Anspruch 1, das ferner Folgendes umfasst:
einen neutralen Netz-Hostanbieter zum Implementieren der gemeinsamen Nutzung des Zellennetzes durch mehrere Zellenbetreiber.

8. Zellennetz nach Anspruch 1, das ferner Folgendes umfasst:
eine zweite Gruppe von Umsetzern, die ausgelegt sind, das Verteilnetz mit der Basisstationskapazitätseinrichtung zu koppeln.

9. Zellennetz nach Anspruch 8, wobei die erste und die zweite Gruppe von Umsetzern unterschiedliche HF-Eigenschaften aufweisen, die die Ausgangsleistung und/oder die HF-Frequenz enthalten.

10. Zellennetz nach Anspruch 8, wobei:
jeder Umsetzer in der ersten Gruppe von Umsetzern ausgelegt ist, (a) Abwärtsstreckenverteilnetzsignale in Abwärtsstrecken-Zellensignale umzusetzen, (b) die Abwärtsstrecken-Zellensignale zu verstärken und (c) die Aufwärtsstrecken-Zellensignale in Verteilnetzsignale umzusetzen, und
jeder Umsetzer in der zweiten Gruppe von Umsetzern ausgelegt ist, (a) Abwärtsstrecken-Zellensignale in Verteilnetzsignale umzusetzen und (b) Aufwärtsstreckenverteilnetzsignale in Zellensignale umzusetzen.

11. Zellennetz nach Anspruch 1, wobei mehrere Zellensignale dadurch auf das Verteilnetz gemultiplext werden, dass sie bei unterschiedlichen HF-Frequenzen angeordnet werden.

12. Zellennetz nach Anspruch 2, wobei mehrfaches optisches Wellenlängemultiplexen verwendet wird, um mehrere Zellensignale auf das Verteilnetz zu multiplexen.

13. Zellennetz nach Anspruch 12, wobei:
mehrere Wellenlängen über das Verteilnetz verteilt und an den mehreren bestehenden Masten oder Pfosten empfangen werden;
das Zellenverteilnetz ferner einen Diskriminator an jedem der mehreren der bestehenden Masten oder Pfosten umfasst zum Auswählen einer Untergruppe der mehreren Wellenlängen.

14. Zellennetz nach Anspruch 12, wobei unterschiedliche Funknetzbetreiber unterschiedliche optische Wellenlängen der mehreren Wellenlängen verwenden, um das gemeinsame Nutzen des Zellenverteilnetzes durch die mehreren Zellenbetreiber zu implementieren.

15. Zellennetz nach Anspruch 1, wobei die erste Gruppe von Umsetzern, die mit den Antennen gekoppelt sind, mit Abwärtsstrecken-HF-Verstärkern von geringerer Leistung gebaut sind, die weniger als 40 Watt verbrauchen, um die Größe der entfernten Einheit zu verringern.

16. Zellennetz nach Anspruch 1, wobei das Verteilnetz so vorgesehen ist, dass es eine Doppelsternarchitektur mit einem primären Sternnetz, das ausgelegt ist, Signale von einem primären Hub-Standort zu sekundären Hub-Standorten zu verteilen, und einer Gruppe von sekundären Sternnetzen, die ausgelegt sind, die Signale von den sekundären Hub-Standorten zu den mehreren bestehenden Masten oder Pfosten zu verteilen, verwendet.

17. Zellennetz nach Anspruch 16, wobei die primären und sekundären Netze ausgelegt sind, unterschiedliche Medien und/oder unterschiedliche Transportprotokolle zu verwenden, um die Signale zu verteilen.

18. Zellennetz nach Anspruch 17, wobei das erste Sternnetz optische Lichtleitfaserverbindungen umfasst und das zweite Sternnetz Freiraumverbindungen umfasst.

19. Zellennetz nach Anspruch 18, wobei die Freiraumverbindungen Mikrowellenverbindungen umfassen.

20. Zellennetz nach Anspruch 18, wobei die Freiraumverbindungen optische Verbindungen umfassen.

21. Zellennetz nach Anspruch 1, wobei der Aufwärtsstreckenempfang von den Antennen an der Basisstationskapazitätseinrichtung kombiniert wird, um Empfangsdiversity zur Verfügung zu stellen.

22. Zellennetz nach Anspruch 21, das ferner Folgendes umfasst:
eine dedizierte Schaltvorrichtung bei der Basisstationskapazitätseinrichtung, die konfiguriert ist, das beste Aufwärtsstreckenempfangssignal auszuwählen.

23. Zellennetz nach Anspruch 21, das ferner Folgendes umfasst:
eine dedizierte Empfangskombinationsvorrichtung an der Basisstationskapazitätseinrichtung, die konfiguriert ist, mehrere Aufwärtsstreckensignale zu kombinieren, um ein optimales Aufwärtsstreckenempfangssignal zu bilden.

24. Zellennetz nach Anspruch 21, wobei unterschiedliche Aufwärtsstreckenantennensignale von unterschiedlichen der mehreren bestehenden Masten oder Pfosten an unterschiedlichen Aufwärtsstreckenempfangs- und Empfangsdiversity-Ports an bestehenden Basisstationen bei der Basisstationskapazitätseinrichtung angeordnet sind.

25. Zellennetz nach Anspruch 1, wobei ein Abwärtsstreckensignal von der Basisstationskapazitätseinrichtung von mehreren der Antennen an mehreren der mehreren bestehenden Masten oder Pfosten gesendet wird, um Sendediversity zur Verfügung zu stellen.

26. Zellennetz nach Anspruch 15, das ferner Folgendes umfasst:
mehrere wärmeleitende Platten, wobei jede wärmeleitende Platte ein wärmeleitendes Medium umfasst, das ausgewählt ist, um eine Wärmeableitfähigkeit bereitzustellen, und geformt ist, um einen entsprechenden der Abwärtsstrecken-HF-Verstärker mit geringer Leistung mit einem entsprechenden der mehreren bestehenden Masten oder Pfosten zu verbinden und um Metall der mehreren bestehenden Masten oder Pfosten als Wärmeableiter zu verwenden.

27. Zellennetz nach Anspruch 1, wobei:
die erste Gruppe von Umsetzern zwei Gruppen von Einrichtungen enthält, um zwei unterschiedliche HF-Bänder zwischen optischen und HF-Signalen umzusetzen;
das optische Verteilnetz ausgelegt ist, zwei Gruppen von optischen Signalen, die HF-Signale aus den zwei unterschiedlichen HF-Bändern repräsentieren, zu transportieren; und
der Umsetzer am Standort der Basisstation zwei Gruppen von Einrichtungen enthält, um zwei unterschiedliche HF-Bänder zwischen optischen und HF-Signalen umzusetzen.

28. Zellennetz nach Anspruch 26, wobei:
jeder der Abwärtsstrecken-HF-Verstärker mit geringer Leistung mit einem Gehäuse durch eine wärmeleitende Verbindung verbunden ist und das Gehäuse mit dem bestehenden Mast oder Pfosten durch eine dazwischen liegende wärmeleitende Platte verbunden ist, die auf einer Seite angepasst ist, um mit dem bestehenden Mast oder Pfosten verschraubt zu sein, und auf der anderen Seite flach ist, um mit dem Gehäuse verbunden zu sein.

29. Zellennetz nach Anspruch 28, wobei:
wenigstens eine der mehreren wärmeleitenden Platten und ein entsprechender der Abwärtsstrecken-HF-Verstärker mit geringer Leistung außerhalb eines entsprechenden der mehreren bestehenden Masten oder Pfosten montiert ist.

30. Zellennetz nach Anspruch 28, wobei:
wenigstens eine der mehreren wärmeleitenden Platten und ein entsprechender der Abwärtsstrecken-HF-Verstärker mit geringer Leistung innerhalb eines entsprechenden der mehreren bestehenden Masten oder Pfosten montiert ist.

## Revendications

1. Réseau cellulaire comprenant :
une pluralité d'antennes, chaque antenne étant montée sur un poteau ou un montant d'une pluralité de montants ou de poteaux existants dans une région pour fournir une couverture sans fil dans la région ;
un premier ensemble de convertisseurs, chaque convertisseur dans le premier ensemble de convertisseurs étant positionné au niveau d'un poteau ou montant correspondant des montants ou poteaux existants, étant couplé à l'antenne montée sur celui-ci, et étant configuré pour effectuer une conversion entre des signaux de réseau de distribution et des signaux cellulaires ;
un réseau de distribution configuré pour coupler le premier ensemble de convertisseurs à un site pivot ; et un équipement de capacité de station de base au niveau du site pivot couplé au premier ensemble de convertisseurs via le réseau de distribution ; où les convertisseurs du premier ensemble de convertisseurs sont couplés au réseau de distribution ;
et **caractérisé en ce que** :
l'équipement situé au niveau de chacun d'une pluralité de montants ou de poteaux existants est conçu pour alimenter en électricité le convertisseur correspondant par l'intermédiaire d'un même système de distribution électrique conçu pour alimenter en électricité les montants ou poteaux existants.

2. Réseau cellulaire selon la revendication 1, dans lequel :
le même système de distribution électrique est conçu pour alimenter en électricité les montants ou poteaux existants par l'intermédiaire d'une pluralité de conduits existants ; et
le réseau de distribution comprend une pluralité de liaisons à fibres optiques qui sont distribuées vers chacun de la pluralité de montants ou poteaux existants par l'intermédiaire de la pluralité de conduits existants.

3. Réseau cellulaire selon la revendication 1, dans lequel le réseau de distribution comprend une liaison optique en espace libre.

4. Réseau cellulaire selon la revendication 1, dans lequel le réseau de distribution comprend un câblage RF.

5. Réseau cellulaire selon la revendication 1, dans lequel le réseau de distribution comprend une liaison hyperfréquence en espace libre.

6. Réseau cellulaire selon la revendication 1, dans lequel la pluralité de montants ou poteaux existants comprennent des poteaux de services publics et/ou des poteaux de lampadaires ; et
le convertisseur correspondant au niveau de chacun de la pluralité de montants ou poteaux existants est alimenté directement par l'alimentation électrique du poteau de lampadaire ou de services publics, en employant un transformateur/un convertisseur de puissance pour la tension, l'intensité et les conversions CA/CC requises.

7. Réseau cellulaire selon la revendication 1, comprenant en outre :
un fournisseur d'hébergement de réseau neutre pour implémenter le partage du réseau cellulaire parmi plusieurs opérateurs de téléphonie cellulaire.

8. Réseau cellulaire selon la revendication 1, comprenant en outre :
un second ensemble de convertisseurs conçus pour coupler le réseau de distribution à l'équipement de capacité de station de base.

9. Réseau cellulaire selon la revendication 8, dans lequel les premier et second ensembles de convertisseurs ont différentes caractéristiques RF, dont au moins une parmi la puissance de sortie et la fréquence RF.

10. Réseau cellulaire selon la revendication 8, dans lequel :
chaque convertisseur dans le premier ensemble de convertisseurs est conçu :
(a) pour convertir des signaux de réseau de distribution de liaison descendante en signaux cellulaires de liaison descendante,
(b) pour amplifier les signaux cellulaires de liaison descendante, et
(c) pour convertir des signaux cellulaires de liaison montante en signaux de réseau de distribution, et chaque convertisseur du second ensemble de convertisseurs est conçu :
(a) pour convertir des signaux cellulaires de liaison descendante en signaux de réseau de distribution, et
(b) pour convertir des signaux de réseau de distribution de liaison montante en signaux cellulaires.

11. Réseau cellulaire selon la revendication 1, dans lequel plusieurs signaux cellulaires sont multiplexés sur le réseau de distribution en les plaçant à différentes fréquences RF.

12. Réseau cellulaire selon la revendication 2, dans lequel un multiplexage en plusieurs longueurs d'ondes optiques est utilisé pour multiplexer plusieurs signaux cellulaires sur le réseau de distribution.

13. Réseau cellulaire selon la revendication 12, dans lequel :
de multiples longueurs d'ondes sont distribuées par l'intermédiaire du réseau de distribution et reçues au niveau de la pluralité de montants ou poteaux existants ;
le réseau de distribution cellulaire comprenant en outre un discriminateur au niveau de chacun de la pluralité de montants ou poteaux existants pour sélectionner un sous-ensemble des multiples longueurs d'ondes.

14. Réseau cellulaire selon la revendication 12, dans lequel différents opérateurs de téléphonie cellulaire utilisent différentes longueurs d'ondes optiques parmi les multiples longueurs d'ondes pour implémenter un partage du réseau de distribution cellulaire entre plusieurs opérateurs de téléphonie cellulaire.

15. Réseau cellulaire selon la revendication 1, dans lequel les convertisseurs du premier ensemble de convertisseurs qui sont couplés aux antennes sont équipés d'amplificateurs RF de liaison descendante de plus faible puissance qui utilisent moins de 40 watts de manière à réduire la taille de l'unité distante.

16. Réseau cellulaire selon la revendication 1, dans lequel le réseau de distribution est réalisé au moyen d'une double architecture en étoile avec un réseau en étoile primaire conçu pour distribuer des signaux depuis un site pivot primaire vers des sites pivots secondaires, et un ensemble de réseaux en étoile secondaires conçus pour distribuer les signaux depuis les sites pivots secondaires vers la pluralité de montants ou poteaux existants.

17. Réseau cellulaire selon la revendication 16, dans lequel les réseaux primaire et secondaires sont conçus pour utiliser différents supports et/ou différents protocoles de transport pour distribuer les signaux.

18. Réseau cellulaire selon la revendication 17, dans lequel le premier réseau en étoile comprend des liaisons à fibres optiques et le second réseau en étoile comprend des liaisons en espace libre.

19. Réseau cellulaire selon la revendication 18, dans lequel les liaisons en espace libre comprennent des liaisons hyperfréquences.

20. Réseau cellulaire selon la revendication 18, dans lequel les liaisons en espace libre comprennent des liaisons optiques.

21. Réseau cellulaire selon la revendication 1, dans lequel la réception de liaison montante à partir des antennes est combinée au niveau de l'équipement de capacité de station de base pour procurer une diversité de réception.

22. Réseau cellulaire selon la revendication 21, comprenant en outre :
un dispositif commutateur dédié au niveau de l'équipement de capacité de station de base configuré pour sélectionner le meilleur signal de réception de liaison montante.

23. Réseau cellulaire selon la revendication 21, comprenant en outre :
un dispositif de combinaison de réception dédié au niveau de l'équipement de capacité de station de base configuré pour combiner plusieurs signaux de liaison montante pour former un signal de réception de liaison montante optimal.

24. Réseau cellulaire selon la revendication 21, dans lequel différents signaux d'antenne de liaison montante provenant de différents poteaux ou montants de la pluralité de montants ou poteaux existants sont placés au niveau de différents ports de diversité de réception et de réception de liaison montante sur des stations de base existantes au niveau de l'équipement de capacité de station de base.

25. Réseau cellulaire selon la revendication 1, dans lequel un signal de liaison descendante provenant de l'équipement de capacité de station de base est transmis par plusieurs antennes de la pluralité d'antennes situées sur plusieurs poteaux ou montants de la pluralité de montants ou poteaux existants pour procurer une diversité de transmission.

26. Réseau cellulaire selon la revendication 15, comprenant en outre :
une pluralité de plaques conductrices de chaleur, chaque plaque conductrice de chaleur comprenant un support conducteur de chaleur sélectionné pour fournir une capacité de dissipation de chaleur, et étant formée pour lier un amplificateur RF correspondant des amplificateurs RF de liaison descendante basse puissance à un poteau ou montant correspondant de la pluralité de montants ou poteaux existants et pour utiliser le métal de la pluralité de montants ou poteaux existants comme dissipateur de chaleur.

27. Réseau cellulaire selon la revendication 1, dans lequel :
le premier ensemble de convertisseurs contient deux ensembles d'équipements pour convertir deux bandes RF différentes entre des signaux optiques et RF ;
le réseau de distribution optique est conçu pour transporter deux ensembles de signaux optiques représentant des signaux RF à partir des deux bandes RF différentes ; et
le convertisseur au niveau du site de la station de base contient deux ensembles d'équipements pour convertir deux bandes RF différentes entre des signaux optiques et RF.

28. Réseau cellulaire selon la revendication 26, dans lequel :
chacun des amplificateurs de liaison descendante RF basse puissance est lié à un boîtier par l'intermédiaire d'un liant conducteur de chaleur, et le boîtier est lié au montant ou au poteau existant par l'intermédiaire d'une plaque conductrice de chaleur qui est adaptée sur une face pour être boulonnée au montant ou au poteau existant et plane sur l'autre face pour être liée au boîtier.

29. Réseau cellulaire selon la revendication 28, dans lequel :
au moins une plaque de la pluralité de plaques conductrices de chaleur et un amplificateur correspondant des amplificateurs de liaison descendante RF basse puissance sont montés à l'extérieur d'un poteau ou montant correspondant de la pluralité de montants ou poteaux existants.

30. Réseau cellulaire selon la revendication 28, dans lequel :
au moins une plaque de la pluralité de plaques conductrices de chaleur et un amplificateur correspondant des amplificateurs de liaison descendante RF basse puissance sont montés à l'intérieur d'un poteau ou montant correspondant de la pluralité de montants ou poteaux existants.
